(19) **Europäisches Patentamt / European Patent Office / Office européen des brevets**

(11) **EP 3 471 863 B1**

(12) **FASCICULE DE BREVET EUROPEEN**

(45) Date de publication et mention
de la délivrance du brevet:
**01.11.2023 Bulletin 2023/44**

(21) Numéro de dépôt: **17740055.3**

(22) Date de dépôt: **19.06.2017**

(51) Classification Internationale des Brevets (IPC):
**B01D 63/06** *(2006.01)*   **B01D 67/00** *(2006.01)*
**B01D 69/06** *(2006.01)*   **B01D 71/02** *(2006.01)*

(52) Classification Coopérative des Brevets (CPC):
**B01D 63/066; B01D 67/0041; B01D 69/06;
B01D 71/02;** B01D 2323/081

(86) Numéro de dépôt international:
**PCT/FR2017/051600**

(87) Numéro de publication internationale:
**WO 2017/220907 (28.12.2017 Gazette 2017/52)**

(54) **FILTRES COMPRENANT DES COUCHES SEPARATRICES A BASE DE BETA-SIC**

FILTER MIT BETA-SIC-BASIERTEN TRENNSCHICHTEN

FILTERS COMPRISING BETA-SIC-BASED SEPARATION LAYERS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **20.06.2016 FR 1655733**

(43) Date de publication de la demande:
**24.04.2019 Bulletin 2019/17**

(73) Titulaire: **SAINT-GOBAIN CENTRE DE
RECHERCHES
ET D'ETUDES EUROPEEN
92400 Courbevoie (FR)**

(72) Inventeurs:
• **VINCENT, Adrien
13440 CHABANNES (FR)**
• **SANT, Jérôme
30133 LES ANGLES (FR)**
• **ROUBIN, Marc
84350 COURTHEZON (FR)**

(74) Mandataire: **Saint-Gobain Recherche
Département Propriété Industrielle
39 Quai Lucien Lefranc
93300 Aubervilliers (FR)**

(56) Documents cités:
EP-A1- 2 559 470        WO-A1-03/024892
US-A1- 2016 121 272     US-B2- 7 699 903

**Description**

L'invention se rapporte au domaine des structures filtrantes en un matériau inorganique, destinées à la filtration des liquides, en particulier les structures revêtues d'une membrane afin de séparer des particules ou des molécules d'un liquide, plus particulièrement de l'eau.

L'invention trouve par exemple son application pour la purification de l'eau de production issue de l'extraction pétrolière ou des gaz de schiste. Elle trouve également son application dans divers procédés industriels de purification voire de séparation de liquides dans le domaine de la chimie, de la pharmaceutique, de l'alimentaire ou l'agroalimentaire.

On connaît depuis longtemps des filtres utilisant des membranes céramiques ou non pour la filtration de fluides variés. Ces filtres peuvent fonctionner selon le principe de la filtration frontale, cette technique impliquant le passage du fluide à traiter à travers un média filtrant, perpendiculairement à sa surface. Cette technique est limitée, en cas d'eaux très chargées en polluants, par l'accumulation de particules et la formation d'un gâteau à la surface du média filtrant, et donne lieu à une chute relativement rapide du flux de perméat. En revanche, cette configuration permet l'utilisation d'un système simple et avec une consommation énergétique moindre.

Selon une autre technique, on utilise la filtration tangentielle, qui, au contraire, permet de limiter l'accumulation de particules, grâce à la circulation longitudinale du fluide à la surface de la membrane. Les particules restent dans le flux de circulation alors que le liquide peut traverser la membrane sous l'effet de la pression. Cette technique assure une stabilité des performances et du niveau de filtration.

Les points forts de la filtration tangentielle sont donc sa facilité de mise en oeuvre, sa fiabilité grâce à l'utilisation des membranes organiques et/ou inorganiques de porosité adaptées pour effectuer ladite filtration, et son fonctionnement en continu. En revanche, la configuration tangentielle requiert idéalement l'utilisation d'au moins deux pompes, l'une de pressurisation (ou gavage) et l'autre de recirculation. La pompe de recirculation présente souvent une consommation énergétique conséquente.

La filtration tangentielle fait appel à peu ou pas d'adjuvants et fournit deux fluides séparés qui peuvent être tous deux valorisables, le concentrât (également appelé retentât) et le filtrat (appelé également perméat). Il s'agit d'un procédé propre qui respecte l'environnement. Les techniques de filtration tangentielle sont notamment utilisées pour la microfiltration, l'ultrafiltration, la nanofiltration.

On connaît ainsi de la technique actuelle de nombreuses structures de filtres fonctionnant suivant les principes de la filtration frontale ou tangentielle.

Selon une configuration un filtre tangentiel peut être configuré pour que le fluide à traiter traverse initialement une paroi poreuse, le perméat étant recueilli par un système collecteur qui assure l'étanchéité et évite la contamination du perméat par le fluide à traiter ou le rétentat.
Une configuration répondant à ce mode est appelée FSM (pour Flat Sheet Membrane). On pourra se référer à la publication disponible sur le site web :http: //www.liqtech.com/img/user/file/FSM Sheet F 4 260 214V2.pdf. Une autre configuration peut être un disque plein ou creux, fixe ou mobile.

D'autres configurations comprennent ou sont constituées à partir de supports tubulaires ou parallélépipédiques en un matériau inorganique poreux formés de parois délimitant des canaux longitudinaux parallèles à l'axe desdits supports. Le filtrat passe au travers des parois puis est évacué au niveau de la surface extérieure périphérique du support poreux dans le cas de la filtration tangentielle ou principalement au niveau des canaux de sortie dans le cas de la filtration frontale.

La surface desdits canaux est également habituellement recouverte d'au moins un revêtement en un matériau inorganique poreux, appelée membrane, dont la nature et la morphologie sont adaptées pour arrêter les molécules ou les particules dont la taille est proche ou supérieure au diamètre médian des pores de ladite membrane, lorsque le fluide filtré se répand dans la porosité du support poreux. La membrane est classiquement déposée sur la surface interne du matériau support par un procédé d'enduction d'une barbotine du matériau inorganique poreux suivie d'un traitement thermique de consolidation, notamment un séchage et éventuellement d'un frittage des membranes céramiques.

L'avantage des membranes céramiques, et plus particulièrement des membranes en carbure de silicium est leur résistance à l'abrasion et à la corrosion. Cependant le mode de fabrication et de dépôt desdites membranes impacte fortement ses propriétés et la réalisation de ce type de membrane peut s'avérer couteux et complexe à maîtriser.

Des filtres avec des membranes en carbure de silicium sont connus. Par exemple, EP0219383A1 dévoile un corps filtrant dont la couche membranaire formée de particules de SiC est directement calcinée sous azote à une température de 1050°C ou 1100°C. Etant donné les particules et la température de frittage employées, la résistance à l'abrasion de la membrane est cependant bien trop faible.

Le brevet US 7,699,903 B2 décrit des couches séparatrices membranaires essentiellement en SiC alpha recristallisé à l'exception des impuretés inévitables. Le procédé consiste à préparer un mélange de deux poudres de particules de SiC alpha très pures à l'exception des impuretés inévitables. Ce mélange est ensuite mis en forme puis fritté entre 1750 et 1950°C de manière à obtenir un filtre membrane en SiC cristallisé sous forme alpha, ou en « SiC alpha », avec une porosité interconnectée permettant ,pour une pression transmembranaire relativement basse, d'obtenir un flux de liquide filtré plusieurs fois supérieur à celui d'un filtre équipé cette fois d'une membrane céramique constitué par un oxyde et présentant un diamètre de pores équivalent, notamment compris entre 0,1 et 0,8 micromètres.

Dans la pratique industrielle, il s'avère cependant extrêmement difficile de réaliser des membranes en SiC recristallisé présentant un diamètre médian de pores très faible, c'est à dire inférieur à 0,8 micromètres, voire inférieur à 500 nanomètres ou même inférieur à 300 nanomètres. Une telle réalisation nécessite en effet l'utilisation de poudres de SiC extrêmement fines, qui posent des problèmes de manipulation et de conditionnement. En outre l'utilisation de telles poudres fines entraîne un surcoût important, car elles ne peuvent être obtenues que par des procédés de sélection et de broyage sophistiqués et coûteux.

La distribution de tailles de pores de ces membranes en SiC alpha produites de manière industrielle reste cependant encore trop large pour accéder un domaine comme l'ultrafiltration.

Alternativement, la demande internationale WO03/024892 a proposé une méthode de préparation d'un support de membrane réalisée à partir d'un mélange de particules de SiC alpha, une poudre de silicium et un précurseur de carbone afin d'obtenir un corps poreux (i.e. un support) formé essentiellement de grains de SiC alpha.

Par ailleurs, de nombreuses autres publications indiquent différentes configurations qui visent à obtenir un filtre présentant les propriétés optimales pour l'application et en particulier :

- une perte de charge faible,
- un flux de perméat sortant le plus élevé et le plus homogène possible d'un canal à un autre dans le plan de section transversale du filtre,
- une forte résistance mécanique et en particulier une résistance et à l'abrasion élevée tel que mesuré par un test de résistance à la rayure,
- une forte sélectivité vis-à-vis des espèces polluantes à filtrer,
- idéalement une résistance chimique élevée notamment à l'acidité.

Dans la pratique, l'optimisation de tout ou partie de ces paramètres dépend substantiellement des propriétés de la membrane utilisée comme couche de séparation dans de tels filtres et notamment de ses caractéristiques structurales et mécaniques.

Il existe donc un besoin pour une membrane résistante à l'abrasion et à l'arrachement qui présente en outre des pores fins et une distribution de taille de pores la plus étroite possible, afin d'obtenir un filtre très sélectif.

Une telle membrane doit aussi conduire à un filtre dont l'encrassement (ou « fouling ») est faible et dont la capacité de recouvrement du débit après nettoyage ou contre lavage ou « back-wash » est la plus élevée possible.

Les travaux menés par la société déposante ont montré, selon une autre approche, qu'au sein de telles structures filtrantes, il était utile d'agir sur la composition chimique de la membrane séparatrice ou couche séparatrice membranaire, pour résoudre une telle problématique et améliorer encore les performances de filtration de la structure, voire la durée de vie du filtre.

L'objet de la présente invention est plus particulièrement de fournir un filtre incorporant une membrane filtrante résistante quelles que soient ses conditions d'utilisation et dont la longévité s'en trouve ainsi améliorée, pour des performances de filtration identique ou sensiblement améliorée vis-à-vis de réalisations antérieures.

En particulier il a été mis en évidence par les travaux de la société déposante, décrits ci-après, un filtre dont la membrane présente une forte résistance à l'abrasion et à l'arrachement, ainsi qu'un faible diamètre médian de pores, propre à son utilisation pour la microfiltration, voire de préférence permettant une utilisation pour l'ultrafiltration, c'est-à-dire en particulier comprenant une couche séparatrice membranaire dont le diamètre médian de pore est inférieur ou égal à 500 nanomètres (nm), de préférence inférieur à 300 nm, tout en conservant en outre une très bonne sélectivité. Un tel objectif a pu être réalisé par une sélection appropriée du matériau constitutif de ladite couche, ledit matériau pouvant être obtenu par un procédé également objet de la présente invention.

L'invention se rapporte ainsi selon un premier aspect à un filtre pour la filtration d'un liquide, comprenant ou constitué par un élément support fait dans un matériau céramique poreux et une couche séparatrice membranaire pour la filtration dudit liquide, ledit élément support étant recouvert sur la partie de sa surface au contact du liquide à filtrer par ladite couche séparatrice membranaire, ladite couche séparatrice étant faite dans un matériau comprenant au moins 70% poids de carbure de silicium SiC par rapport au poids total de l'ensemble des composés minéraux présents dans ladite couche séparatrice, ledit filtre étant caractérisé en ce que le ratio entre la teneur molaire en SiC sous la forme béta et la teneur molaire en SiC sous la forme alpha (béta-SiC/alpha-SiC) de la couche séparatrice est supérieur à 0,5, de préférence supérieur à 0,7, de préférence encore supérieure à 1,0 et de manière très préférée est supérieure à 2,0.

Selon un mode possible, la partie au contact avec le liquide à filtrer est la surface externe du filtre et la couche séparatrice membranaire est avantageusement déposée sur cette surface.

Selon un autre mode, ledit élément présente une forme tubulaire ou parallélépipédique délimitée par une surface externe et comprenant dans sa portion interne un ensemble de canaux adjacents, d'axes parallèles entre eux et séparés les uns des autres par des parois dudit matériau céramique poreux, au moins une partie desdits canaux étant recouverts sur leur surface interne de la couche séparatrice membranaire et éventuellement au moins une partie de ladite surface externe est recouverte de la couche séparatrice membranaire.

Selon un autre mode alternatif, l'élément présente une forme pleine constituée par ledit matériau céramique poreux, ladite forme étant droite ou courbe, par exemple une plaque, ladite couche séparatrice recouvrant la surface externe de l'élément au contact du liquide à filtrer.

La masse totale de l'ensemble des composés minéraux présents dans ladite couche séparatrice correspond très préférentiellement à la masse de ladite couche séparatrice.

Selon d'autres caractéristiques additionnelles optionnelles et avantageuses de la couche séparatrice membranaire :

- Le SiC représente plus de 90%, de préférence plus de 95% ou même plus de 98% de la masse du matériau constituant ladite couche séparatrice.
- La teneur en SiC sous sa forme béta dans la couche séparatrice est supérieure à 30%, supérieure à 50%, voire supérieure à 70%, de préférence supérieure à 75%, voire supérieure à 80% ou même supérieure à de 95%.
- Ladite couche séparatrice est faite dans un matériau comprenant au moins 25% poids et de préférence encore au moins 50% poids de carbure de silicium sous la forme cristallographique béta (β-SiC) par rapport à la somme des composés minéraux présents dans ladite couche.
- Le SiC constituant les grains de la couche séparatrice est essentiellement, voire entièrement, sous forme cristallographique béta.
- Lorsque du SiC alpha est présent, le ratio de la teneur en SiC béta sur la teneur en SiC alpha dans la membrane est inférieur à 50, voire inférieur à 20 et en particulier compris entre 0,5 et 50, de préférence entre 1,0 et 20, de manière encore plus préférence entre 2 et 10.
- La porosité de la couche séparatrice est comprise entre 10 et 70%, notamment entre 30 et 60%.
- La teneur massique en oxygène du matériau constituant la couche séparatrice est inférieure à 1,0%, de préférence inférieure à 0,5%.
- La teneur en silicium résiduel dans le matériau constituant la couche séparatrice est inférieure à 1%, de préférence encore inférieure à 0,5% en masse. Une telle teneur conduit en effet à une meilleure résistance chimique de la couche. Afin d'éviter une teneur en silicium résiduel trop importante, il est possible selon l'invention de traiter la couche séparatrice frittée par une recuisson sous azote typiquement entre 1200 et 1500°C tout en évitant l'oxydation de la membrane.
- La teneur massique en Al du matériau constituant la couche séparatrice est de inférieure à 1,0%, de préférence encore inférieure à 0,5%.
- La teneur massique en azote (N) du matériau constituant la couche séparatrice est inférieure à 1,0%, de préférence inférieure à 0,5%.
- La teneur massique en Fer (Fe), exprimée sous forme $Fe_2O_3$, du matériau constituant la couche séparatrice est comprise entre 0,01 et 2,0%, de préférence entre 0,1 et 1,0%. Une telle teneur permet de réduire la dispersion de taille de pores de la couche séparatrice après cuisson.
- La teneur en Bore (B), exprimée sous forme $B_2O_3$, du matériau constituant la couche séparatrice est comprise entre 0,01 et 1,5%, de préférence entre 0,05 et 1,0%. Une telle teneur permet d'améliorer la résistance à la corrosion de la membrane après cuisson.
- Le matériau céramique constituant la couche séparatrice comporte des grains de SiC frittés dont la distribution de taille est comprise entre 20 nm et 10 microns.
- La couche séparatrice membranaire comporte une phase liante comprenant des grains denses de béta-SiC de taille moyenne comprise entre 20 nanomètres et 5 micromètres. Ces grains de SiC dense proviennent des particules de carbone initial dans la suspension avant dépôt sur le support monolithique poreux. Ces grains résultent de la réaction de ces particules de carbone avec le Silicium fondu ou sous forme gazeuse, en particulier sous forme SiO, provenant des particules de Silicium apportées initialement à la suspension. Elles sont dispersées dans la matrice liante et assurent une cohésion maximale de la matrice.
- La phase liante comprend aussi de préférence des grains poreux de beta SiC de taille moyenne comprise entre 1 et 10 micromètres. Ces grains de SiC poreux proviennent vraisemblablement des particules de Silicium initial dans la suspension avant dépôt sur le support monolithique poreux. Le demandeur considère que ces grains résultent de la réaction de ces particules de Silicium partiellement fondu ou sous forme gazeuse, en particulier sous forme SiO, avec les particules de carbone apportées initialement à la suspension. Elles sont dispersées dans la matrice liante et contribuent à l'obtention d'une porosité maximale de la matrice et donc de la couche séparatrice. La présence de ces grains poreux de beta SiC est particulièrement avantageuse pour réduire la perte de charge tout en assurant la sélectivité nécessaire de cette couche séparatrice.
- Une fraction granulaire liée par la phase liante. Cette fraction granulaire comporte de préférence des particules de SiC, sous forme alpha ou beta, de préférence cristallisée sous forme alpha, typiquement de taille comprise entre 0, 5 et 50 micromètres, dont la diamètre médian de distribution est compris entre 2 et 10 micromètres.

- Le diamètre médian de pores de la couche séparatrice est inférieur à 500 nm et de préférence est compris entre 10 et 500 nanomètres, notamment entre 50 et 500 nanomètres, en particulier entre 100 et 500 nanomètres.

- Le ratio $[d_{pic}-d_{min]}/d_{pic}$ de diamètres de pores est inférieur à 2/3, le diamètre $d_{pic}$ d'une population de pores étant le diamètre de pores de la couche séparatrice pour lequel , est mesuré le volume maximal d'intrusion de mercure sur la courbe de distribution de pores mesurée par porosimétrie au mercure selon la norme ISO 15901-1.2005 part 1, $D_{min}$ correspondant au diamètre de pores le plus petit obtenu par une telle mesure sous une pression de mercure de 2068 bars. Un tel critère est représentatif de la capacité de la membrane à résister à l'encrassement et à être nettoyée plus facilement par contre-lavage. On considère que si ce ratio est supérieur à 2/3, la membrane aura tendance à présenter un important taux de colmatage irréversible, propre à la rendre inutilisable ou à en limiter sérieusement la durée de vie.

Le diamètre médian de pores peut être considéré comme représentatif de la sélectivité de la membrane : on pourra ainsi utiliser le filtre selon l'invention dans les domaines de la microfiltration ou de l'ultrafiltration en fonction de cette valeur du diamètre médian de pores.

En ce qui concerne le support poreux, on donne les indications suivantes concernant des modes de réalisation préférés mais non limitatifs de la présente invention :

- La porosité du matériau constituant le support poreux est comprise entre 20 et 70%, préférentiellement entre 30 et 60%.

- Le diamètre médian de pores du matériau constituant le support poreux est compris entre 5 et 50 micromètres, de manière plus préférée entre 10 et 40 micromètres.

- Le support poreux comprend et de préférence est constitué en un matériau céramique, de préférence un matériau céramique non oxyde, de préférence choisi parmi le carbure de Silicium SiC, en particulier le SiC fritté en phase liquide ou en phase solide, le SiC recristallisé, le nitrure de Silicium, en particulier $Si_3N_4$, l'oxynitrure de Silicium, en particulier $Si_2ON_2$, l'oxynitrure de Silicium et d'Aluminium, ou une combinaison de ceux-ci. De préférence le support est constitué de carbure de Silicium, de manière encore plus préférée de SiC recristallisé.

- La base de la forme tubulaire ou parallélépipédique est polygonale, de préférence carrée ou hexagonale, ou circulaire. La forme tubulaire ou parallélépipédique présente un axe central longitudinal de symétrie (A).

- Notamment dans le cas d'un filtre à filtration frontale, les canaux sont bouchés à une extrémité, de préférence alternativement, afin de définir des canaux d'entrée et des canaux de sortie de façon à forcer le liquide entrant par les canaux d'entrée à la surface desquels est déposée la membrane au travers de laquelle le liquide passe avant d'être évacué par les canaux de sortie.

- Si le filtre est tangentiel, l'extrémité du support tubulaire peut être en contact avec une plaque étanche au liquide à filtrer et perforée à l'endroit des canaux qui lui font face de manière à former un support filtrant placé dans une tubulure ou un système de filtration. Une autre possibilité peut consister à introduire le filtre tangentiel dans la tubulure un joint périphérique étanche à chaque extrémité et autour du filtre de manière à assurer le flux de perméat indépendamment du flux de concentrât.

- Les éléments sont de section hexagonale, la distance entre deux côtés opposés de la section hexagonale étant comprise entre 20 et 80 mm.

- Les conduits des éléments filtrants sont ouverts sur leurs deux extrémités.

- Les conduits des éléments filtrants sont alternativement bouchés sur la face d'introduction du liquide à filtrer et sur la face opposée.

- Les conduits des éléments filtrants sont ouvert sur la face d'introduction du liquide et fermés sur la face de récupération.

- Une majorité des conduits, notamment plus de 50%, voire plus de 80%, sont de section carrée, ronde ou oblongue, de préférence ronde, et de préférence encore ont un diamètre hydraulique compris entre 0,5mm et 10mm, de préférence entre 1mm et 8mm, de préférence encore entre 1mm et 5mm. Le diamètre hydraulique Dh d'un canal est calculé, dans un plan de section transversal P quelconque de la structure tubulaire, à partir de la surface de la section du canal S dudit canal et de son périmètre P, selon ledit plan de section et par application de l'expression classique suivante :

$$Dh = 4 \times S / P$$

Comme indiqué précédemment, le filtre selon l'invention peut comprendre, outre la couche séparatrice membranaire, une ou plusieurs couches primaires, disposées entre le matériau constituant l'élément support et le matériau constituant la membrane. Le rôle de cette (ces) couche(s) dite(s) primaire(s) consiste à faciliter l'accrochage de la couche séparatrice et/ou à éviter que les particules de la couche séparatrice passent à travers le support, notamment lors d'un dépôt par enduction.

Le filtre peut comprendre en outre une ou plusieurs couches primaires disposées entre le matériau constituant l'élément support et le matériau constituant la couche séparatrice membranaire.

Selon d'autres caractéristiques avantageuses mais non limitative de cette couche support :

- l'épaisseur moyenne des couches membranaires (couche séparatrice et primaire) est comprise de préférence entre 1 $\mu$m et 150 micromètres, préférentiellement entre 10 $\mu$m et 100 $\mu$m, plus préférentiellement entre 20 $\mu$m et 80$\mu$m.
- le ratio d'épaisseur de la couche primaire sur celle de la couche membranaire séparatrice est typiquement de 1 à 5, de préférence de 1 à 2.
- la taille de pores de la couche primaire est supérieure à celle de la couche séparatrice membranaire typiquement d'un rapport 2 à 40 fois supérieur, préférentiellement de 3 à 20 fois supérieur.

Dans la présente description, sauf autrement spécifié, tous les pourcentages sont massiques.

Les phases cristallisées de SiC alpha ou béta décrites précédemment et leurs proportions respectives, en particulier dans la couche séparatrice membranaire, peuvent être déterminées par diffraction X et analyse Rietveld.

On entend classiquement par phase beta-SiC toute phase correspondant au polytype cristallisé sous la forme cubique et notamment sous la forme 3C selon la notation de Ramsdell.

De même, on entend classiquement par phase alpha-SiC toute phase cristallisée sous la forme hexagonale ou rhomboédrique et pouvant se présenter sous différents polytypes, le plus couramment 4H, 6H, 15R.

L'invention se rapporte également à une couche séparatrice membranaire telle que précédemment décrite, faite dans un matériau comprenant plus de 70% poids de carbure de silicium (SiC), ledit carbure de silicium se présentant au moins pour partie, notamment pour au 25% du poids de la couche séparatrice membranaire, sous la forme béta et de préférence pour une majeure partie, c'est-à-dire pour au moins 50% du poids de la couche séparatrice membranaire, sous forme béta.

Sans qu'il soit besoin de les reporter de nouveau ici, il est bien évident que l'invention porte également sur les membranes répondant à toutes les caractéristiques préférés décrites précédemment, en relation avec la structure filtrante dans laquelle ladite couche est incorporée.

Enfin, l'invention se rapporte à un procédé de fabrication d'une couche séparatrice membranaire tel que précédemment décrite, dans un élément servant notamment pour un filtre tangentiel ou frontal, de préférence tangentiel, comprenant les étapes suivantes :

- préparation d'une barbotine à partir d'une poudre comprenant une source de carbone, notamment de particules de carbone et d'une source de silicium de préférence choisie parmi le silicium métallique et l'oxyde de silicium,
- application de ladite barbotine sur l'élément support, dans des conditions permettant la formation d'une couche mince de ladite barbotine sur la partie interne des canaux dudit filtre,
- séchage puis cuisson sous une atmosphère non oxydante à une température comprise entre 1350°C et 1680°C, de préférence entre 1400°C et 1650°C.

La présente invention trouve ainsi également sa particularité en raison du procédé permettant le dépôt et la mise en oeuvre de la membrane telle que décrite précédemment. Celle-ci peut ainsi être obtenue à partir d'un dépôt d'une suspension comprenant des précurseurs de SiC, c'est-à-dire aboutissant à la synthèse de la phase SiC sous forme béta dans la couche finale, après cuisson aux températures précédemment décrites.

En particulier, selon un procédé selon l'invention, il peut être déposé successivement ou concomitamment un précurseur comportant l'élément carbone et un précurseur comportant l'élément silicium. La (ou les) couche(s) déposée(s) sont ensuite frittée(s) sous atmosphère non oxydante à une température inférieure à 1650°C, notamment comprise entre 1350 et 1650°C.

De préférence le précurseur de Si est une poudre de silicium métal de diamètre médian compris en 1 et 10 micromètres. En dessous de 1 micromètre la poudre de Slicium est très réactive et difficile à disperser dans une suspension aqueuse. Au-dessus de 10 microns, le diamètre de pores généré dans la membrane après cuisson est élevé et il est très difficile de maintenir une couche séparatrice présentant un diamètre médian de pores inférieur à 500 nanomètres.

De préférence le précurseur de carbone est une poudre de carbone de diamètre médian compris en 3 et 5 micromètres.

Si le frittage est réalisé à une température maximale en dessous du seuil de transformation ou de formation en SiC sous sa forme alpha (1700°C), il est néanmoins possible d'envisager selon l'invention des ajouts de particules de SiC sous forme alpha dans la suspension destinée au dépôt de la couche séparatrice membranaire. L'ajout de particules de SiC sous forme alpha permet de renforcer la résistance à l'abrasion de la couche séparatrice.

Selon l'inventeur la teneur en SiC alpha doit cependant de préférence rester inférieure à 25%, de préférence encore inférieure à 20% voire inférieure à 15%, ou même inférieure à 10% ou encore 5%, en masse et par rapport à la masse totale de ladite couche séparatrice après sa cuisson. De préférence, les particules de alpha-SiC ajoutées, pour au moins 90% poids d'entre elles, présente une taille à 0,1 micromètres, voire même supérieure à 0,2 micromètres.

On donne en outre les indications suivantes :

La porosité ouverte et le diamètre médian de pores du support poreux décrits dans la présente description sont déterminés de manière connue par porosimétrie au mercure, selon la norme ISO 15901-1.2005 part 1.

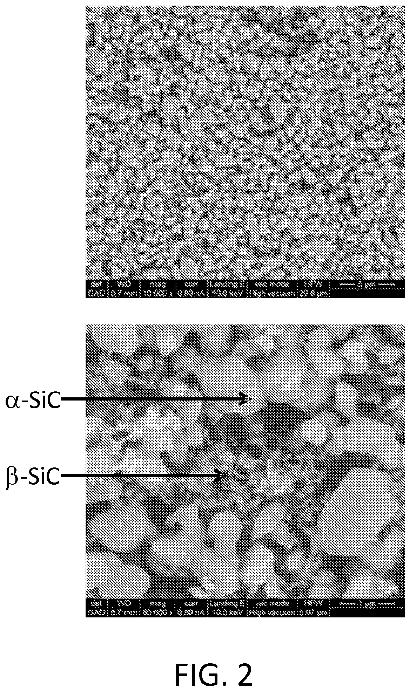

La porosité et le diamètre médian de pores de la couche membranaire, notamment la couche séparatrice sont avantageusement déterminés selon l'invention à l'aide d'un microscope électronique à balayage. Par exemple, on réalise des sections d'une paroi du support en coupe transversale, comme illustré par les figures 2 à 5 ci-jointe, de manière à visualiser toute l'épaisseur du revêtement sur une longueur cumulée d'au moins 1,5 cm. L'acquisition des images est effectuée sur un échantillon d'au moins 50 grains. L'aire et le diamètre équivalent de chacun des pores sont obtenus à partir des clichés par des techniques classiques d'analyse d'images, éventuellement après une binarisation de l'image visant à en augmenter le contraste. On déduit ainsi une distribution de diamètres équivalents, dont on extrait le diamètre médian de pores. De même on peut déterminer par cette méthode une taille médiane des particules constituant la couche membranaire.

Un exemple de détermination du diamètre médian de pores ou de la taille médiane des particules constituant la couche séparatrice, à titre d'illustration, comprend la succession des étapes suivantes, classique dans le domaine :

- Une série de clichés en MEB est prise du support avec sa couche membranaire observé selon une coupe transversale (c'est-à-dire dans toute l'épaisseur d'une paroi). Pour plus de netteté, les clichés sont effectués sur une section polie du matériau. L'acquisition de l'image est effectuée sur une longueur cumulée de la couche membranaire au moins égal à 1,5 cm, afin d'obtenir des valeurs représentatives de l'ensemble de l'échantillon.
- Les clichés sont de préférence soumis à des techniques de binarisation, bien connues dans les techniques de traitement de l'image, pour augmenter le contraste du contour des particules ou des pores.
- Pour chaque particule ou chaque pore constituant la couche membranaire, une mesure de son aire est réalisée. Un diamètre équivalent de pores ou de grain est déterminé(e), correspondant au diamètre d'un disque parfait de même aire que celui mesuré pour ladite particule ou pour ledit pore (cette opération pouvant éventuellement être réalisée à l'aide d'un logiciel dédié notamment Visilog® commercialisé par Noesis).
- une distribution de taille de particules ou de grains ou de diamètre de pores est ainsi obtenue selon une courbe classique de répartition et une taille médiane des particules et/ou un diamètre médian de pores constituant la couche membranaire sont ainsi déterminés, cette taille médiane ou ce diamètre médian correspondant respectivement au diamètre équivalent divisant ladite distribution en une première population ne comportant que des particules ou de pores de diamètre équivalent supérieur ou égal à cette taille médiane et une deuxième population comportant que des particules de diamètre équivalent inférieur à cette taille médiane ou ce diamètre médian .

Au sens de la présente description et sauf mention contraire, la taille médiane des particules ou le diamètre médian des pores mesurée par microscopie désigne respectivement le diamètre $d_{50}$ des particules ou de pores audessous duquel se trouve 50% en nombre de la population.

En revanche s'agissant du diamètre de pores mesuré sur le support par porosimétrie mercure, le diamètre médian correspond à un seuil de 50% de la population en volume.

On appelle « frittage », de façon classique dans le domaine des céramiques (c'est-à-dire au sens indiqué dans la norme internationale ISO 836:2001, point 120), une consolidation par traitement thermique d'un aggloméré granulaire. Le traitement thermique des particules utilisées comme charge de départ pour l'obtention des couches membranaires selon l'invention permet ainsi la jonction et le développement de leurs interfaces de contact par mouvement des atomes à l'intérieur et entre lesdites particules.

Le frittage entre les grains de carbone et les grains de silicium métallique selon l'invention est normalement essentiellement effectué en phase liquide, la température de frittage étant supérieure à ou proche de la température de fusion du silicium métallique.

Le frittage peut être effectué en présence d'un additif de frittage, tel qu'un oxyde de fer. Par additif de frittage, on entend un composé connu habituellement pour permettre et/ou accélérer la cinétique de la réaction de frittage.

Le diamètre médian $D_{50}$ des poudres de particules utilisées pour réaliser le support ou la ou les couches de la membrane est donné classiquement par une caractérisation de distribution granulométrique, par exemple au moyen d'un granulomètre laser.

Les teneurs massiques en azote et en oxygène élémentaires de la couche séparatrice peuvent être déterminées après fusion sous gaz inerte, par exemple au moyen d'un analyseur commercialisé sous la référence TC-436 par la société LECO Corporation.

La teneur en SiC peut aussi être mesurée selon un protocole défini selon la norme ANSI B74.15-1992-(R2007) par différence entre carbone total et carbone libre, cette différence correspondant au carbone fixé sous forme de carbure de silicium.

Le silicium métallique résiduel est mesuré selon la méthode connue de l'homme du métier et référencée sous ANSI B74-151992 (R2000).

La nature et la teneur des différents matériaux minéraux constituant la membrane sont classiquement déterminés par diffraction des rayons et analyse Rietveld, selon les techniques bien connus dans le domaine. En particulier les différentes formes de carbure de silicium, plus particulièrement le taux de béta-SiC dans la couche séparatrice membranaire, peuvent être déterminés par cette méthode.

On donne ci-après un exemple non limitatif permettant la réalisation d'un filtre selon l'invention, bien évidemment non limitatif également des procédés permettant d'obtenir un tel filtre et du procédé selon la présente invention:

Selon une première étape, le support filtrant est obtenu par extrusion d'une pâte au travers d'une filière configurée selon la géométrie de la structure à réaliser selon l'invention. L'extrusion est suivie d'un séchage et d'une cuisson afin de fritter le matériau inorganique constituant le support et obtenir les caractéristiques de porosité et de résistance mécanique nécessaire à l'application.

Par exemple, lorsqu'il s'agit d'un support en SiC, il peut être en particulier obtenu selon les étapes de fabrication suivantes :

- malaxage d'un mélange comportant des particules de carbure de silicium de pureté supérieure à 98% et présentant une granulométrie telle que 75% en masse des particules présente un diamètre supérieur à 30 micromètres, le diamètre médian en masse de cette fraction granulométrique (mesuré par granulomètre laser) étant inférieur à 300 micromètres. Le mélange comporte aussi un liant organique du type dérivé de cellulose. On ajoute de l'eau et on malaxe jusqu'à obtenir une pâte homogène dont la plasticité permet l'extrusion, la filière étant configurée pour l'obtention des monolithes selon l'invention.
- séchage des monolithes crus par micro-onde pendant un temps suffisant pour amener la teneur en eau non liée chimiquement à moins de 1% en masse.
- cuisson jusqu'à une température d'au moins 1300°C dans le cas de support filtrant à base de SiC fritté en phase liquide, de nitrure de Silicium, d'oxynitrure de Silicium, d'oxynitrure de Silicium et d'Aluminium ou même de BN et d'au moins 1900°C et inférieure à 2400°C dans le cas d'un support filtrant à base de SiC recristallisé ou fritté en phase solide. Dans le cas d'un support filtrant en nitrure ou oxynitrure l'atmosphère de cuisson est de préférence azotée. Dans le cas d'un support filtrant en SiC recristallisé l'atmosphère de cuisson est de préférence neutre et plus particulièrement d'argon. La température est maintenue typiquement pendant au moins 1 heure et de préférence pendant au moins 3 heures. Le matériau obtenu présente une porosité ouverte de 20 à 60% en volume et un diamètre médian de pores de l'ordre de 5 à 50 micromètres.

Le support filtrant est ensuite revêtu selon l'invention d'une membrane. Une ou plusieurs couches peuvent être déposées afin de former une membrane selon diverses techniques connues de l'homme du métier : techniques de dépôt à partir de suspensions ou de barbotines, techniques de dépôt chimique en phase vapeur (CVD) ou de projection thermique, par exemple projection plasma (plasma spraying).

De préférence la ou les couches constituant la membrane sont déposées par enduction à partir de barbotines ou de suspensions. Une première couche (appelée couche primaire ou primaire) est préférentiellement d'abord déposée en contact avec le matériau poreux constituant le substrat, jouant le rôle de couche d'accrochage.

Bien que préférentiellement présente, dans certaines configurations de filtre, cette couche primaire peut être absente, sans sortir du cadre de l'invention.

Afin de contrôler la rhéologie des barbotines servant au dépôt des couches successives (primaire et couche séparatrice membranaire) et respecter une viscosité adéquate (typiquement comprise entre 0,01 à 1,5 Pa.s de préférence 0,1 à 0,8 Pa.s sous un gradient de cisaillement de $1s^{-1}$ mesurée à 22°C selon la norme DINC33-53019), des agents épaississants (selon des proportions typiquement entre 0,02 et 2% de la masse d'eau). Des agents liants (typiquement entre 0,5 et 20% de la masse de poudre de SiC), des agents dispersants (entre 0,01 et 1% de la masse de poudre de SiC) peuvent aussi être ajoutés. Les agents épaississants sont de préférence des dérivés cellulosiques, les agents liants de préférence des PVA ou des dérivés d'acrylique et les agents dispersants sont de préférence du type polymétacrylate d'ammonium.

Des ajouts organiques exprimés en poids de la barbotine, notamment du Dolapix A88 comme agent défloculant par exemple selon une proportion de 0,01 à 0,5% ; de la Tylose par exemple de type MH4000P comme épaississant selon une proportion de 0,01 à 1%, du PVA comme agent collant à raison de 0,1 à 2% exprimé en masse d'extrait sec; du monoéthylène glycol comme plastifiant et de l'éthanol à 95% volume comme réducteur de tension de surface, sont plus particulièrement appropriés.

Si le filtre est configuré pour une application en filtration tangentielle, il peut être fixé sur une plaque perforée à l'endroit des ouvertures de canaux, de manière étanche, afin d'être installé dans une tubulure ou un système de filtration. Le traitement thermique employé pour fixer la plaque perforée au support filtre doit être effectué à une température inférieure à la température de décomposition de la membrane composite.

Selon l'invention, plusieurs modes sont possibles dans le procédé de dépôt et de cuisson d'une membrane selon l'invention :

Selon un premier mode, le support filtrant de préférence préalablement fritté est revêtu d'une couche de primaire en alpha-SiC ou en béta-SiC ou encore en un mélange des deux formes. Le support muni de la couche est ensuite fritté à haute température.

Il est ensuite déposé sur le primaire une suspension comprenant les précurseurs de Si et de C décrits précédemment afin de former la couche séparatrice membranaire. Le support ainsi revêtu est ensuite fritté sous atmosphère non oxydante à une température comprise entre 1350 et 1680°C. Comme indiqué précédemment, le précurseur de Silicium peut être de la silice pyrogénée ou du silicone ou ses dérivés [ou de préférence une poudre de silicium métallique et la source de carbone est de préférence une poudre de carbone graphite ou amorphe.

Selon un deuxième mode de réalisation, on procède comme pour le premier mode mais la couche de primaire est frittée en même temps que la couche séparatrice. Selon un troisième mode de réalisation, les précurseurs sont déposés séparément selon deux couches successives.

Si le filtre présente des canaux alternativement bouchés afin d'obtenir un filtre membrane fonctionnant selon les principes de la filtration frontale et si le bouchage est effectué postérieurement au dépôt de la membrane au moins pour une face du filtre, soit du côté des canaux d'entrée soit du côté de sortie, le bouchage peut être réalisé avec une barbotine de SiC, les bouchons étant frittés à une température inférieure à la température de décomposition de la membrane composite, préférentiellement en même temps que la membrane.

Les figures associées aux exemples qui suivent sont fournis afin d'illustrer l'invention et ses avantages, sans bien entendu que les modes de réalisations ainsi décrits puissent être considérés comme limitatifs de la présente invention.

Dans les figures ci-jointes :

- La figure 1 illustre une configuration classique d'un filtre tubulaire selon la technique actuelle, selon un plan de coupe transversal P.
- La figure 2 est un cliché de microscopie de la membrane essentiellement en alpha SiC (a-SiC) selon l'exemple 1 comparatif.
- La figure 3 est un cliché de microscopie de la membrane essentiellement en béta SiC (b-SiC) selon l'exemple 2 selon l'invention.
- La figure 4 est un cliché de microscopie électronique du filtre selon l'exemple 4, montrant le support, le primaire et la membrane.
- La figure 5 est un autre cliché de microscopie selon l'exemple 4 selon l'invention, centré et agrandi sur la couche séparatrice membranaire en béta SiC.

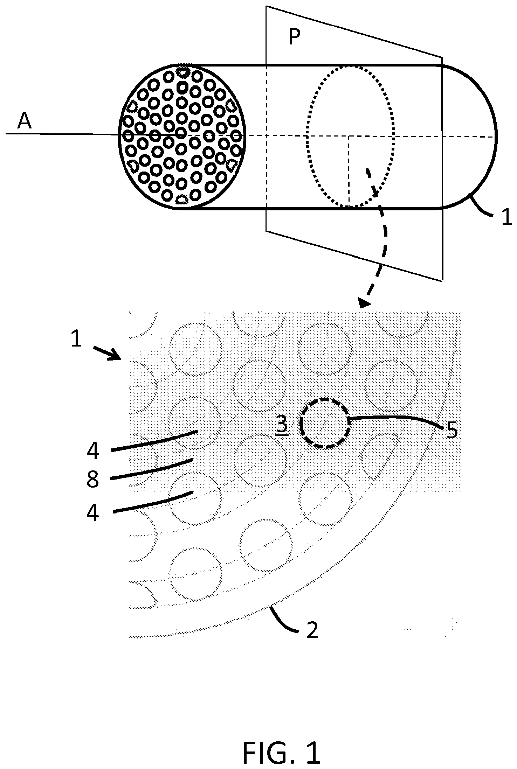

La figure 1 illustre un filtre tangentiel 1 selon la technique actuelle et conforme à la présente invention, tel qu'utilisé pour la filtration d'un fluide tel qu'un liquide. La figure 1 représente une vue schématique du plan de coupe transversal P. Le filtre comprend ou le plus souvent est constitué par un élément support 1 fait dans un matériau inorganique poreux de préférence non oxyde. L'élément présente classiquement une forme tubulaire d'axe central longitudinal A, délimitée par une surface externe 2. Il comprend dans sa portion interne 3 un ensemble de canaux 4 adjacents, d'axes parallèles entre eux et séparés les uns des autres par des parois 8. Les parois sont constituées dans un matériau inorganique poreux laissant passer le filtrat depuis la partie interne 3 vers la surface externe 2. Les canaux 4 sont recouverts sur leur surface interne d'une membrane 5 déposée sur un primaire d'accrochage, tel qu'illustré par le cliché de microscopie électronique reporté sur la figure 1. Cette membrane 5 entre en contact avec ledit fluide circulant dans lesdits canaux et en permet la filtration.

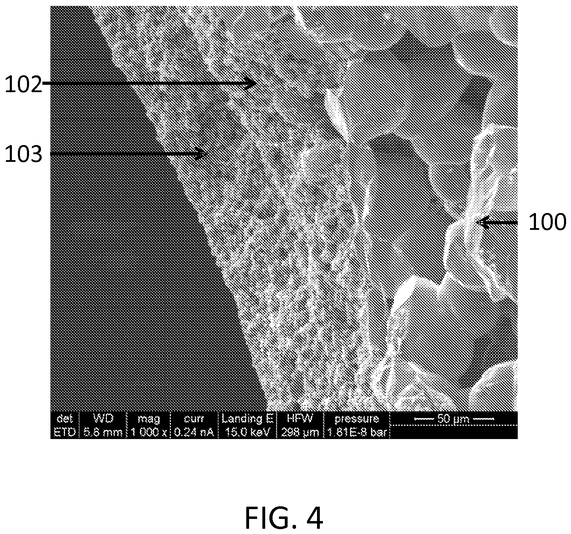

Sur la figure 4 on a reporté un cliché de microscopie électronique pratiqué sur un canal 4 de la figure 1, sur le filtre de l'exemple 4 qui suit. On observe sur cette figure le support poreux 100 de plus forte granulométrie, la couche de primaire 102, de granulométrie intermédiaire, permettant l'accrochage de la couche séparatrice membranaire 103 de fine granulométrie.

Les exemples qui suivent sont fournis à titre uniquement illustratifs. Ils ne sont pas limitatifs et permettent de mieux comprendre les avantages techniques liés à la mise en oeuvre de la présente invention :

Les supports selon tous les exemples sont identiques et sont obtenus selon le même protocole expérimental qui suit :

On mélange dans un malaxeur :

- 3000 g d'un mélange des deux poudres de particules de carbure de silicium de pureté supérieure à 98% dans les proportions suivantes : 75% en masse d'une première poudre de particules présentant un diamètre médian de l'ordre de 60 micromètres et 25% en masse d'une deuxième poudre de particules présentant un diamètre médian de l'ordre de 2 micromètres. (Au sens de la présente description, le diamètre médian $d_{50}$ désigne le diamètre des particules au-dessous duquel se trouve 50% en masse de la population desdites particules).

- 300 g d'un liant organique du type dérivé de cellulose.

On ajoute de l'eau environ 20% en masse par rapport à la masse totale de SiC et d'additif organique et on malaxe jusqu'à obtenir une pâte homogène dont la plasticité permet l'extrusion d'une structure de forme tubulaire, la filière étant configurée pour l'obtention de blocs monolithes dont les canaux et les parois externes présentent une structure selon la configuration recherchée et telle que représentée sur les figures 1 à 2 ci-jointes.

Plus précisément, les monolithes cuits présentent des canaux ronds de diamètre hydraulique 2mm, les canaux périphériques en demi-lune représentés sur les figures présentent un diamètre hydraulique de 1,25mm. L'épaisseur moyenne de la paroi externe est 1,1 mm et l'OFA (Open Front Area) de la face d'entrée du filtre est de 37% . L'OFA (« open front area » en anglais) ou surface de front ouverte, est obtenue en calculant le rapport en pourcentage de l'aire couverte par la somme des sections transversales des canaux sur l'aire totale de la section transversale correspondante du support poreux.

On synthétise ainsi pour chaque configuration des supports crus de 25 mm de diamètre et 30 cm de longueur.

Les monolithes crus ainsi obtenus sont séchés par micro-onde pendant un temps suffisant pour amener la teneur en eau non liée chimiquement à moins de 1% en masse.

Les monolithes sont ensuite cuits jusqu'à une température d'au moins 2100°C qui est maintenue pendant 5 heures. Le matériau obtenu présente une porosité ouverte de 43% et un diamètre moyen de distribution de pores de l'ordre de 25 micromètres, tel que mesuré par porosimétrie mercure.

## Exemple 1 (comparatif):

Selon cet exemple, une membrane en carbure de silicium est déposée sur la paroi interne des canaux d'une structure support telle qu'obtenue précédemment, selon le procédé décrit ci-après:

Un primaire d'accrochage de la membrane est constitué dans un premier temps, à partir d'une barbotine dont la formulation minérale comporte 48% en masse d'une poudre de grains de SiC noir (SIKA DPF-C) dont le diamètre médian D50 est d'environ 10 micromètres, 32% en masse d'une poudre de grains de SiC noir (SIKA FCP-07) dont le diamètre médian D50 est d'environ 2 micromètres, 13% en masse d'une poudre de grains de Silicium métallique dont le diamètre médian D50 est d'environ 4 micromètres, 7% d'une poudre de carbone amorphe dont le diamètre médian D50 est d'environ 1 micromètres. L'ensemble est mélangé dans une solution d'eau désionisée, la quantité d'eau représentant environ 50% de la masse totale du mélange.

Une barbotine du matériau constituant la couche séparatrice membranaire est également préparée pour être déposée sur le primaire d'accrochage, dont la formulation comporte 80% en masse de grains de alpha-SiC dont le $d_{50}$ est de l'ordre de 0,5 micromètre, 13% en masse d'une poudre de grains de silicium métallique dont le diamètre médian D50 est d'environ 4 micromètres, 7% d'une poudre de carbone amorphe dont le diamètre médian D50 est d'environ 1 micromètres. L'ensemble est mélangé dans une solution d'eau désionisée, la quantité d'eau représentant environ 50% de la masse totale du mélange.

La rhéologie des barbotines a été réglée par ajout d'additifs organiques à 0,5-0,7 Pa.s sous un gradient de cisaillement de 1s$^{-1}$, mesurée à 22°C selon la norme DINC33-53019.

Ces deux couches sont déposées successivement selon le même procédé décrit ci-après : la barbotine est introduite dans un réservoir sous agitation (20 tour/min). Après une phase de désaérage sous vide léger (typiquement 25 millibars) tout en conservant l'agitation, le réservoir est mis en surpression d'environ 0,7 bar afin de pouvoir enduire l'intérieur du support à partir de sa partie basse jusqu'à son extrémité supérieure. Cette opération ne prend que quelques secondes pour un support de 30 cm de longueur. Immédiatement après enduction de la barbotine sur la paroi interne des canaux du support, l'excès est évacué par gravité.

Après le dépôt de chaque couche, les supports sont séchés à température ambiante pendant 10 minutes puis à 60°C pendant 12h.

Finalement, après dépôt des couches et séchages, les supports sont cuits sous Argon à une température de 1470°C pendant 4h à la pression ambiante.

Une coupe transversale est réalisée sur les filtres ainsi obtenus. La structure de la membrane est observée et étudiée au microscope électronique à balayage. Sur la figure 2 on a reporté la photographie obtenue pour la coupe transversale de la membrane. On peut voir sur cette photographie des grains de alpha-SiC majoritaires en poids et entourés de très fines particules de béta-SiC.

### Exemple 2 (selon l'invention):

Selon cet exemple, on procède de façon identique à l'exemple 1 comparatif (support identique et primaire identique) mais la couche séparatrice est obtenue à partir d'une barbotine dont la composition minérale est la suivante : 20% en masse de grains de la poudre de alpha-SiC dont le $d_{50}$ est de l'ordre de 0,5 micromètre, 53% en masse de la poudre de grains de silicium métallique dont le diamètre médian D50 est d'environ 4 micromètres, 27% de la poudre de carbone amorphe dont le diamètre médian D50 est d'environ 1 micromètres.

Comme pour l'exemple 1, les deux couches (primaire puis membrane) sont déposées successivement sur le support.

Les supports séchés comme précédemment décrit sont finalement cuits sous Argon à une température de 1470°C pendant 4h à la pression ambiante.

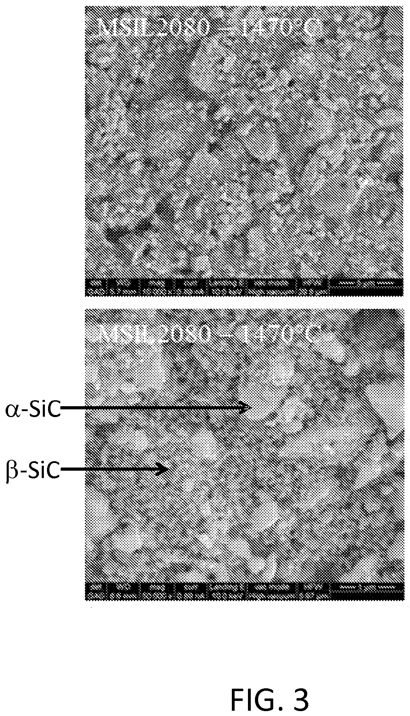

Sur la figure 3 on a reporté la photographie obtenue pour la coupe transversale de la membrane. On peut voir sur cette photographie des grains de alpha-SiC minoritaires en poids et entourés de très fines particules de béta-SiC, en quantité cette fois majoritaire.

### Exemple 3 (selon l'invention):

Selon cet exemple, on procède de façon identique à l'exemple 2 mais la couche séparatrice est obtenue à partir d'une barbotine dont la composition minérale est la suivante : 67% en masse de la poudre de grains de silicium métallique dont le diamètre médian D50 est d'environ 4 micromètres, 33% de la poudre de carbone amorphe dont le diamètre médian D50 est d'environ 1 micromètres. Comme pour les exemples précédents, les deux couches (primaire puis séparatrice) sont déposées successivement dans le support.

Les supports séchés comme précédemment décrits sont finalement cuits sous Argon à une température de 1470°C pendant 4h à la pression ambiante.

### Exemple 4 (selon l'invention):

Selon cet exemple, on procède de façon identique à l'exemple 3 qui précède mais les supports séchés sont finalement cuits sous Argon à une température plus élevée de 1600°C pendant 4h à la pression ambiante.

Sur la figure 4, on a reporté un cliché de microscopie électronique du filtre selon cet exemple, montrant le support 100, le primaire 102 et la couche séparatrice 103 comme décrit précédemment.

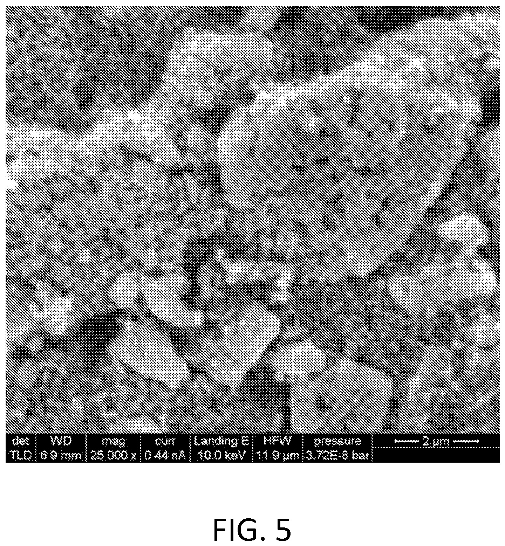

Sur la figure 5 on a reporté une autre photographie obtenue pour une coupe agrandie et centrée sur la couche séparatrice 103. On peut voir sur cette photographie des grains de béta-SiC de tailles différentes et en particulier des grains de taille plus importante, issus de la réaction des grains de silicium métallique par le carbone, ces grains de taille importante étant séparés par des grains de taille beaucoup plus faible issus de la transformation des grains de carbone initialement ajoutés à la suspension et formant une phase liante autour desdits grains de plus grande taille.

### Exemple 5 (comparatif):

Selon cet exemple, on procède de façon identique à l'exemple 3 qui précède mais les supports séchés sont finalement cuits sous Argon à une température encore plus élevée de 1680°C pendant 4h à la pression ambiante. Une telle température entraîne la transformation d'une majeure partie du béta-SiC en alpha-SiC.

### Exemple 6 (comparatif):

Selon cet exemple, on procède de façon identique à l'exemple 1 précédent mais on utilise pour la confection de la barbotine uniquement un partie minérale constituée d'une poudre initiale de alpha-SiC dont le $d_{50}$ est de l'ordre de 1 micromètre. Les supports séchés sont finalement cuits sous Argon à une température de 1800°C pendant 4h à la pression ambiante.

Les propriétés et les caractéristiques des filtres ainsi obtenus sont mesurées comme suit :

Sur la base des clichés de microscopie électronique, on mesure par analyse d'image l'épaisseur moyenne des couches successives obtenues pour chaque exemple.

L'épaisseur moyenne du primaire est de l'ordre de 30 micromètres et celle de la couche séparatrice membranaire de l'ordre de 30 micromètres pour tous les exemples. Le diamètre médian de pores de la couche membranaire varie entre 100 et 1100 nm selon les exemples, comme indiqué dans le tableau 1 qui suit.

Dans le tableau qui suit :

La porosité globale de la membrane, en pourcentage, et le diamètre et D50 des pores dans la membrane séparatrice ont été déterminés par observation d'images prises au microscope à balayage comme décrit précédemment.

Afin de déterminer le critère de sélectivité ($D_{pic}$-$D_{min}$) / $D_{pic}$ une courbe de taille de pores a été obtenue par porosimétrie au mercure.

Le volume de pores (Vi) a été mesuré par intrusion de Mercure à 2000 bars à l'aide d'un porosimètre à mercure Autopore IV série 9500 Micromeritics, sur un échantillon de lcm3 environ. La norme applicable est l'ISO 15901-1.2005 part 1. L'augmentation de pression jusqu'à haute pression conduit à « pousser » le mercure dans des pores de taille de plus en plus petite. L'intrusion du mercure se fait classiquement en deux étapes. Dans un premier temps, une intrusion de mercure est réalisée en basse pression jusqu'à 44 psia (environ 3 bar), en utilisant une pression d'air pour introduire le mercure dans les plus gros pores (>4pm). Dans un deuxième temps, une intrusion à haute pression est réalisée avec de l'huile jusqu'à la pression maximale de 30000 psia (2068 bars). Il a pu être déterminé le diamètre de pores $D_{pic}$ de la couche séparatrice pour lequel pour lequel le volume de mercure est maximal. De même il a été déterminé $D_{min}$ correspondant au diamètre de pores le plus petit obtenu par intrusion de mercure.

La composition de la membrane après cuisson, notamment les pourcentages respectifs de alpha et de béta SiC, ont été déterminé de la façon suivante :

Les morceaux de membrane prélevés sur les échantillons de filtres des exemples précédents ont été analysés avec l'aide de l'équipement X'Pert de PANalytical en configuration K$\alpha$m et détection rapide selon les paramètres expérimentaux suivants :

- _Acquisition_ : Programme d'analyse « Rietveld-HighScore Plus » : de 5° à 80° en 2$\theta$, pas de 0.017°, 150 s/pas
- _Optique avant_ :

  Fente de divergence fixe : 1/4°
  Fente de Soller 0.04 rad
  Masque : 10mm
  Fente antidiffusion fixe : 1/2°

- _Porte échantillon_ : Spinner (rotation de l'échantillon sur lui-même afin d'augmenter la statistique de comptage et limiter les orientations préférentielles)
- _Optique arrière_ :

  Fente antidiffusion fixe : 1/4°
  Fente de Soller : 0.04 rad
  Filtre Ni

Les diffractogrammes ont été analysés qualitativement avec le logiciel EVA et la base de données PDF2-ICDD (Release 2005) puis ils ont été analysés quantitativement avec le logiciel HighScore Plus selon un affinement Rietveld.

La teneur en SiC a été mesurée selon la norme ANSI B74.15-192- (R2007)

On donne additionnellement ci-après les détails des autres protocoles expérimentaux suivis :

La mesure de la profondeur de rayure de la couche séparatrice membranaire, facteur essentiel de longévité du filtre, aussi appelé « scratch test », est effectuée à l'aide d'une pointe sphérico conique en diamant Rockwell C formant un angle conique de 120°, le rayon de courbure de la pointe étant de 200 microns. La pointe est conduite à vitesse constante de 12mm/min selon une charge incrémentale de 1N par pas de 1 mm sur une longueur de mesure de 6mm. Plusieurs passages peuvent être effectués. La dégradation du revêtement est une combinaison des contraintes d'indentation élastique et/ou plastique, des contraintes de frottement ainsi que des contraintes résiduelles internes au sein de la couche de matériau du revêtement. Il est mesuré la profondeur de pénétration de l'indenteur après un sixième passage au pas de 4N. Le taux de profondeur de rayure a été mesuré en pourcentage par rapport à la référence selon l'invention (exemple 2) fixée à 100. Le taux de résistance des autres exemples est calculé en faisant le rapport de profondeur de l'indenteur de l'exemple divisé par la profondeur de l'indenteur mesurée sur l'exemple 2. Un taux supérieur à 100% représente une résistance à la rayure inférieure à la référence.

Les caractéristiques et les propriétés des filtres et de la couche séparatrice membranaire (désignée dans le tableau ci-dessous par membrane) obtenus selon les exemples 1 à 6 sont données dans le tableau 1 ci-après :

Tableau 1

|  | Exemple 1 (comp.) | Exemple 2 (inv.) | Exemple 3 (inv.) | Exemple 4 (inv.) | Exemple 5 (inv.) | Exemple 6 (comp.) |
|---|---|---|---|---|---|---|
| Teneur massique en SiC de la membrane (%) | >99,0 | >99,0 | >99,0 | >99,0 | >99,0 | >99,0 |

(suite)

| | Exemple 1 (comp.) | Exemple 2 (inv.) | Exemple 3 (inv.) | Exemple 4 (inv.) | Exemple 5 (inv.) | Exemple 6 (comp.) |
|---|---|---|---|---|---|---|
| Teneur massique alpha-SiC | 80 | 20 | 0 | 0 | 5 | 100 |
| Teneur massique béta-SiC | 20 | 80 | 100 | 100 | 95 | 0 |
| Ratio béta/alpha | 0,25 | 4 | - | - | 19 | - |
| Cuisson de la membrane | 1470°C/ 4h Ar | 1470°C/ 4h Ar | 1470°C/ 4h Ar | 1600°C/ 4h Ar | 1700°C/ 4h/ Ar | 1800°C/ 2h/ Ar |
| Epaisseur moyenne de la membrane séparatrice (micromètres) | 30 | 30 | 30 | 30 | 30 | 30 |
| Diamètre médian de pores d50 de la membrane séparatrice (nm) | 470 | 300 | 110 | 120 | 115 | 1100 |
| Porosité de la membrane séparatrice (%volume) | 40 | 40 | 40 | 40 | 40 | 40 |
| Critère de sélectivité : [dpic-dmin] /dpic | 0,82 | 0,6 | 0,5 | 0,5 | 0,5 | 0,4 |
| Taux de rayure de la membrane | 200 | 100 | 100 | 100 | 100 | 100 |

Les résultats regroupés dans le tableau 1 qui précèdent indiquent que les exemples 2 à 5 selon l'invention présentent les meilleures performances combinées aux différents tests et mesures pratiquées.

En particulier les filtres 2 à 5 dotés d'une membrane filtrante et en particulier d'une couche séparatrice membranaire selon l'invention présentent en particulier une résistance mécanique élevée (scratch test). En particulier le taux de rayures des couches selon l'invention reporté dans le tableau qui précède est comparable à celui obtenu lorsque le matériau de la membrane est constitué uniquement de SiC recristallisé obtenu à très haute température (voir exemple 6 comparatif). Au contraire, la couche séparatrice membranaire du filtre selon l'exemple comparatif 1, constituée d'un mélange d'alpha et de béta SiC selon un ratio massique $\alpha/\beta$ trop faible de 0,25, présente un taux de rayures très supérieur, propre à en faciliter l'arrachement et l'abrasion sous la pression du liquide.

Si on se réfère à la comparaison des exemples selon l'invention avec les exemples comparatifs 1 et 6, on remarque qu'il devient possible par application de la présente invention de proposer des filtres très sélectifs, c'est-à-dire comprenant une membrane de filtration dont la taille médiane des pores est très fine, et dont l'étendue de la distribution en taille de pores est minimisée. Une telle propriété permet d'envisager l'utilisation de tels filtres jusque dans le domaine de l'ultrafiltration, c'est-à-dire pour la séparation de particules polluantes dans un liquide dont la taille médiane d50 est inférieure à 500 micromètres, notamment comprise entre 100 et 500 micromètres.

En outre, on peut voir, à la lecture des résultats reportés dans le tableau 1, que les filtres selon les exemples 2 à 5 présentent comparativement non seulement un diamètre médian de pores d50 très faible, de l'ordre de 300 nm voire même de l'ordre de 100 nm, mais également une sélectivité très élevée, c'est-à-dire une capacité des filtres selon l'invention à limiter le risque de colmatage irréversible de la membrane.

Au final, les résultats regroupés dans le tableau indiquent que le matériau utilisé selon l'invention pour fabriquer la couche séparatrice membranaire permet d'obtenir le meilleur compromis entre la résistance mécanique et des propriétés de porosité permettant de travailler dans le domaine de l'ultrafiltration. Le matériau constituant la membrane selon l'invention se caractérise en particulier par la présence d'une proportion importante, voire majoritaire de béta-SiC.

**Revendications**

1.  Filtre pour la filtration d'un liquide, comprenant ou constitué par un élément support fait dans un matériau céramique poreux et une couche séparatrice membranaire pour la filtration dudit liquide, ledit élément support étant recouvert sur la partie de sa surface au contact du liquide à filtrer par ladite couche séparatrice membranaire, ladite couche séparatrice étant faite dans un matériau comprenant au moins 70% poids de carbure de silicium SiC par rapport au poids total de l'ensemble des composés minéraux présents dans ladite couche séparatrice, ledit filtre étant **caractérisé en ce que** le ratio entre la teneur molaire en SiC sous la forme béta et la teneur molaire en SiC sous la forme alpha de la couche séparatrice est supérieur à 0,5, la nature et la teneur des différentes formes de carbure de silicium étant déterminées par diffraction des rayons et analyse Rietveld.

**2.** Filtre selon la revendication précédente **caractérisé en ce que** le ratio entre la teneur molaire en SiC sous la forme béta et la teneur molaire en SiC sous la forme alpha est supérieur à 0,7, de préférence supérieur à 1,0 et de manière préférée supérieur à 2,0.

**3.** Filtre selon l'une des revendications précédentes dans lequel ledit élément présentant une forme tubulaire ou parallélépipédique délimitée par une surface externe et comprenant dans sa portion interne un ensemble de canaux adjacents, d'axes parallèles entre eux et séparés les uns des autres par des parois dudit matériau céramique poreux, au moins une partie desdits canaux étant recouverts sur leur surface interne de la couche séparatrice membranaire et éventuellement au moins une partie de ladite surface externe est recouverte de la couche séparatrice membranaire.

**4.** Filtre selon l'une des revendications 1 ou 2 dans lequel l'élément présentant une forme pleine constituée par ledit matériau céramique poreux, ladite forme étant droite ou courbe, par exemple une plaque, ladite couche séparatrice recouvrant la surface externe de l'élément au contact du liquide à filtrer.

**5.** Filtre selon l'une des revendications précédentes, dans lequel ladite couche séparatrice est faite dans un matériau comprenant au moins 90% poids de carbure de silicium par rapport au poids total des composés minéraux présents dans ladite couche séparatrice.

**6.** Filtre selon l'une des revendications précédentes, dans lequel ladite couche séparatrice est faite dans un matériau comprenant au moins 25% poids de carbure de silicium béta par rapport au poids total des composés minéraux présents dans ladite couche séparatrice.

**7.** Filtre selon l'une des revendications précédentes, dans lequel ladite couche séparatrice est faite dans un matériau comprenant au moins 50% poids de carbure de silicium sous la forme cristallographique béta par rapport au poids total des composés minéraux présents dans ladite couche.

**8.** Filtre selon la revendication précédente, dans lequel ledit ratio béta-SiC/alpha-SiC est inférieur à 50, de préférence inférieur à 20.

**9.** Filtre selon l'une des revendications précédentes, dans lequel la teneur massique en silicium métallique dans la couche séparatrice est inférieure à 1% poids par rapport au poids total des composés minéraux présents dans la couche séparatrice.

**10.** Filtre selon l'une des revendications précédentes, dans lequel le ratio $[d_{pic}-d_{min}]/d_{pic}$ des diamètres de pores est inférieur à 2/3, le diamètre $d_{pic}$ d'une population de pores étant le diamètre de pores de la couche séparatrice pour lequel, sur la courbe de distribution de pores mesurée par porosimétrie au mercure est mesuré le volume maximal d'intrusion de mercure, $D_{min}$ correspondant au diamètre de pores le plus petit obtenu par une telle mesure, sous une pression de 2068 bars (3000 psi) et étant mesuré selon la norme ISO 15901-1.2005.

**11.** Filtre selon l'une des revendications précédentes, dans lequel le matériau céramique de la couche séparatrice membranaire comporte des grains de SiC fritté de taille comprise en 20 nm et 10 microns.

**12.** Filtre selon l'une des revendications précédentes, dans lequel la porosité de la couche séparatrice est comprise entre 10 et 70%.

**13.** Filtre selon l'une des revendications précédentes, dans lequel le diamètre médian de pores de la couche séparatrice est compris entre 10 nanomètres et 500 nanomètres.

**14.** Filtre selon l'une des revendications précédentes, dans lequel la taille médiane des grains de SiC dans ledit matériau est comprise entre 20 nanomètres et 10 micromètres.

**15.** Filtre selon l'une des revendications précédentes, dans lequel la teneur massique en oxygène élémentaire du matériau constituant la couche séparatrice est inférieure ou égale à 1% et de préférence est inférieure à 0,5%.

**16.** Filtre selon l'une des revendications précédentes dans lequel la porosité ouverte du matériau constituant l'élément support est comprise entre 20 et 70%, le diamètre médian de pores du matériau constituant le l'élément support poreux étant de préférence compris entre 5 et 50 micromètres.

**17.** Filtre selon l'une des revendications précédentes comprenant en outre une ou plusieurs couches primaires disposées entre le matériau constituant l'élément support et le matériau constituant la couche séparatrice membranaire.

**Patentansprüche**

**1.** Filter zum Filtern einer Flüssigkeit, umfassend oder bestehend aus einem Trägerelement, das aus einem porösen Keramikmaterial hergestellt ist, und einer Membrantrennschicht zum Filtern der Flüssigkeit, wobei das Trägerelement auf dem Abschnitt seiner Oberfläche in Kontakt mit der zu filternden Flüssigkeit durch die Membrantrennschicht bedeckt ist,
wobei die Trennschicht aus einem Material hergestellt ist, umfassend zu mindestens 70 Gew.-% Siliciumcarbid SiC bezogen auf das Gesamtgewicht aller Mineralverbindungen, die in der Trennschicht vorhanden sind, wobei der Filter **dadurch gekennzeichnet ist, dass** das Verhältnis zwischen dem molaren Anteil an SiC in der Beta-Form und dem molaren Anteil an SiC in der Alpha-Form der Trennschicht größer als 0,5 ist, wobei die Art und der Anteil der verschiedenen Siliciumcarbidformen durch Strahlbeugung und Rietveld-Analyse bestimmt werden.

**2.** Filter nach dem vorstehenden Anspruch **dadurch gekennzeichnet, dass** das Verhältnis zwischen dem molaren Anteil an SiC in der Beta-Form und dem molaren Anteil an SiC in der Alpha-Form größer als 0,7, vorzugsweise größer als 1,0 und bevorzugt größer als 2,0 ist.

**3.** Filter nach einem der vorstehenden Ansprüche, wobei das Element eine rohrförmige oder parallelepipedische Form aufweist, die durch eine Außenoberfläche begrenzt ist und umfassend in seinem Innenabschnitt eine Anordnung von angrenzenden Kanälen mit parallelen Achsen dazwischen und voneinander getrennt durch Wände des porösen Keramikmaterials, wobei mindestens ein Teil der Kanäle auf ihrer Innenoberfläche mit der Membrantrennschicht bedeckt sind und optional mindestens ein Teil der Außenoberfläche mit der Membrantrennschicht bedeckt ist.

**4.** Filter nach einem der Ansprüche 1 oder 2, wobei das Element eine Vollform aufweist, die aus dem porösen Keramikmaterial besteht, wobei die Form gerade oder gekrümmt ist, zum Beispiel eine Platte, wobei die Trennschicht die Außenoberfläche des Elements bedeckt, die in Kontakt mit der zu filternden Flüssigkeit ist.

**5.** Filter nach einem der vorstehenden Ansprüche, wobei die Trennschicht aus einem Material hergestellt ist, umfassend zu mindestens 90 Gew.-% Siliciumcarbid bezogen auf das Gesamtgewicht der Mineralverbindungen, die in der Trennschicht vorhanden sind.

**6.** Filter nach einem der vorstehenden Ansprüche, wobei die Trennschicht aus einem Material hergestellt ist, umfassend zu mindestens 25 Gew.-% Beta-Siliciumcarbid bezogen auf das Gesamtgewicht der Mineralverbindungen, die in der Trennschicht vorhanden sind.

**7.** Filter nach einem der vorstehenden Ansprüche, wobei die Trennschicht aus einem Material hergestellt ist, umfassend zu mindestens 50 Gew.-% Siliciumcarbid in der kristalloqraphischen Beta-Form bezogen auf das Gesamtgewicht der Mineralverbindungen, die in der Schicht vorhanden sind.

**8.** Filter nach dem vorstehenden Anspruch, wobei das Verhältnis Beta-SiC/Alpha-SiC kleiner als 50, vorzugsweise kleiner als 20 ist.

**9.** Filter nach einem der vorstehenden Ansprüche, wobei der Gewichtsanteil an metallischem Silicium in der Trennschicht kleiner als 1 Gew.-% bezogen auf das Gesamtgewicht der Mineralverbindungen ist, die in der Trennschicht vorhanden sind.

**10.** Filter nach einem der vorstehenden Ansprüche, wobei das Verhältnis $[d_{pic}-d_{min}]/d_{Pic}$ der Porendurchmesser kleiner als 2/3 ist, der Durchmesser $d_{pic}$ einer Porenpopulation der Porendurchmesser der Trennschicht ist, bei der auf der Porenabgabekurve, die durch Quecksilberporosimetrie gemessen wird, das maximale Eindringungsvolumen von Merkur gemessen wird, $D_{min}$ dem kleinsten Porendurchmesser entspricht, der durch eine solche Messung erhalten wird, unter einem Druck von 2068 bar (3000 psi) und gemäß ISO 15901-1.2005 gemessen.

**11.** Filter nach einem der vorstehenden Ansprüche, wobei das Keramikmaterial der Membrantrennschicht Körner von gesintertem SiC mit Größe zwischen 20 nm bis 10 Mikrometer aufweist.

**12.** Filter nach einem der vorstehenden Ansprüche, wobei die Porosität der Membrantrennschicht zwischen 10 und 70 % liegt.

**13.** Filter nach einem der vorstehenden Ansprüche, wobei der mittlere Porendurchmesser der Trennschicht zwischen 10 Nanometer und 500 Nanometer liegt.

**14.** Filter nach einem der vorstehenden Ansprüche, wobei die mittlere Größe der SiC-Körner in dem Material zwischen 20 Nanometer und 10 Mikrometer liegt.

**15.** Filter nach einem der vorstehenden Ansprüche, wobei der Gewichtsanteil an elementarem Sauerstoff des Materials, das die Trennschicht bildet, kleiner als oder gleich 1 % ist und vorzugsweise kleiner als 0,5 % ist.

**16.** Filter nach einem der vorstehenden Ansprüche, wobei die offene Porosität des Materials, aus dem das Trägerelement besteht, zwischen 20 und 70 % liegt, der mittlere Durchmesser der Poren des Materials, aus dem das poröse Trägerelement besteht, vorzugsweise zwischen 5 und 50 Mikrometer liegt.

**17.** Filter nach einem der vorstehenden Ansprüche, ferner umfassend eine oder mehrere primäre Schichten, die zwischen dem Material, das das Trägerelement bildet, und dem Material, das die Membrantrennschicht bildet, eingerichtet sind.

**Claims**

**1.** A filter for the filtration of a liquid, comprising or consisting of a support element made of a porous ceramic material and a separating membrane layer for the filtration of said liquid, said support element being covered on the portion of its surface in contact with the liquid to be filtered by said separating membrane layer, said separating layer being made from a material comprising at least 70% by weight of silicon carbide SiC relative to the total weight of all of the mineral compounds present in said separating layer, said filter being **characterized in that** the ratio between the molar content of SiC in beta form and the molar content of SiC in alpha form of the separating layer is greater than 0.5, the nature and the respective proportions of the silicon carbide forms being determined by x-ray diffraction and Rietveld analysis.

**2.** The filter as claimed in the preceding claim, **characterized in that** the ratio between the molar content of SiC in beta form and the molar content of SiC in alpha form is greater than 0.7, preferably greater than 1.0 and preferably greater than 2.0.

**3.** The filter as claimed in either of the preceding claims, wherein said element having a tubular or parallelepipedal shape delimited by an external surface and comprising, in its internal portion, a set of adjacent channels with axes parallel to one another and separated from one another by walls of said porous ceramic material, at least one portion of said channels being covered on their internal surface with the separating membrane layer and optionally at least one portion of said external surface is covered with the separating membrane layer.

**4.** The filter as claimed in either of claims 1 and 2, wherein the element having a solid shape formed by said porous ceramic material, said shape being straight or curved, for example a plate, said separating layer covering the external surface of the element in contact with the liquid to be filtered.

**5.** The filter as claimed in one of the preceding claims, wherein said separating layer is made from a material comprising at least 90% by weight of silicon carbide relative to the total weight of the mineral compounds present in said separating layer.

**6.** The filter as claimed in one of the preceding claims, wherein said separating layer is made from a material comprising at least 25% by weight of beta silicon carbide relative to the total weight of the mineral compounds present in said separating layer.

**7.** The filter as claimed in one of the preceding claims, wherein said separating layer is made from a material comprising at least 50% by weight of silicon carbide in the beta crystallographic form relative to the total weight of the mineral compounds present in said layer.

8. The filter as claimed in the preceding claim, wherein said beta-SiC/alpha-SiC ratio is less than 50, preferably less than 20.

9. The filter as claimed in one of the preceding claims, wherein the weight content of silicon metal in the separating layer is less than 1% by weight relative to the total weight of the mineral compounds present in the separating layer.

10. The filter as claimed in one of the preceding claims, wherein the $[d_{peak}-d_{min}]/d_{peak}$ ratio of the pore diameters is less than 2/3, the diameter $d_{peak}$ of a population of pores being the pore diameter of the separating layer for which, on the pore distribution curve measured by mercury porosimetry, the maximum mercury intrusion volume is measured, $D_{min}$ corresponding to the smallest pore diameter obtained by such a measurement, under a pressure of 2068 bar (3000 psi) and being measured according to the standard ISO 15901-1.2005.

11. The filter as claimed in one of the preceding claims, wherein the ceramic material of the separating membrane layer comprises sintered SiC grains having a size of between 20 nm and 10 microns.

12. The filter as claimed in one of the preceding claims, wherein the porosity of the separating layer is between 10% and 70%.

13. The filter as claimed in one of the preceding claims, wherein the median pore diameter of the separating layer is between 10 nanometers and 500 nanometers.

14. The filter as claimed in one of the preceding claims, wherein the median size of the SiC grains in said material is between 20 nanometers and 10 micrometers.

15. The filter as claimed in one of the preceding claims, wherein the weight content of elemental oxygen of the material constituting the separating layer is less than or equal to 1% and preferably is less than 0.5%.

16. The filter as claimed in one of the preceding claims, wherein the open porosity of the material constituting the support element is between 20% and 70%, the median pore diameter of the material constituting the porous support element preferably being between 5 and 50 micrometers.

17. The filter as claimed in one of the preceding claims, additionally comprising one or more primer layers positioned between the material constituting the support element and the material constituting the separating membrane layer.

FIG. 1

α-SiC

β-SiC

## FIG. 2

FIG. 3

FIG. 4

FIG. 5

**EP 3 471 863 B1**

## RÉFÉRENCES CITÉES DANS LA DESCRIPTION

**Documents brevets cités dans la description**

- EP 0219383 A1
- US 7699903 B2
- WO 03024892 A